# EUROPEAN PATENT APPLICATION

(11) **EP 1 580 208 A1**
(43) Date of publication of application: **28.09.2005**
(21) Application number: 05251738.0
(22) Date of filing: 22.03.2005
(51) Int. Cl.: C08G 18/16, C08G 18/40, C08J 9/08

(54) **A composition for the preparation of a foam and a method for manufacturing a foam material**

(30) Priority: 27.03.2004 GB 0406958
(71) Applicant: Veenandaal Schaumstoffwerk GmbH, 96215 Lichtenfels (DE)
(72) Inventor: Warmerdan, Jan J., Veenandaal Schaumstoffwerk GmbH, 96215 Lichtenfels (DE); Bareuter, Gerd c/o Veenandaal Schaumstoffwerk GmbH, 96215 Lichtenfels (DE)
(74) Representative: Lock, Howard John

(57) **Abstract**

A method of manufacturing a foam material comprises forming the foam material from a reaction mixture to provide the material in the presence of a blowing medium to provide gas to foam the material. The blowing medium comprises a first blowing agent comprising carbon dioxide, a second blowing agent comprising water, and a third blowing agent comprising a carboxylic acid, a derivative of a carboxylic acid, or a mixture of a carboxylic acid and a derivative of a carboxylic acid. The second and the third blowing agents are reacted with a reactive material to liberate gas.

## Description

This invention relates to methods of manufacturing foam materials. More particularly, but not exclusively, the invention relates to methods of manufacturing polyurethane foam materials.

Polyurethane foams are produced by reacting a hydroxyl or amine terminated polyol with a diisocyanate or polyisocyanate in the presence of a blowing agent. The blowing agent can be water which produces carbon dioxide on reacting with the polyisocyanate. An auxiliary blowing agent can also be used and this is generally in the form of a low boiling point liquid. Examples of auxiliary blowing agents that have been used are chlorofluorocarbons, hydrochlorofluorocarbons, chlorinated solvents such as methylene chloride, hydrocarbons such as pentane and other solvents such as acetone. However the use of such materials is not regarded as environmentally satisfactory and alternatives are sought.

Polyurethane foams may be formed in either discreet slabstock or continuously. Such processes are described in the literature, for example "Polyurethane Handbook", Günter Oertel, Hanser Publishers, NY, ISBN 0-02-948920-2, and "Flexible Polyurethane Foams, Chemistry and Technology", G. Woods, Applied Science, ISBN 0-85334-981-9.

According to one aspect of this invention, there is provided a method of manufacturing a foam material comprising forming the foam material from a reaction mixture to provide the material in the presence of a blowing medium to provide gas to foam the material, the blowing medium comprising a first blowing agent comprising carbon dioxide, a second blowing agent comprising water, and a third blowing agent comprising a carboxylic acid, a derivative of a carboxylic acid, or a mixture of a carboxylic acid and a derivative of a carboxylic acid, wherein the second and the third blowing agents are reacted with a reactive material to liberate gas.

According to another aspect of this invention there is provided a composition for manufacturing a foam material, the composition comprising a reaction mixture for forming the material and a blowing medium to provide gas to foam the material, the blowing medium comprising a first blowing agent comprising carbon dioxide, a second blowing agent comprising water, and a third blowing agent comprising a carboxylic acid, a derivative of a carboxylic acid, or a mixture of a carboxylic acid and a derivative of a carboxylic acid wherein the second and the third blowing agent can be reacted with a reactive material to liberate gas.

According to another aspect of this invention there is provided a method of manufacturing a foam material comprising: providing a reaction mixture comprising a plurality of components including a blowing medium, the blowing medium comprising a first blowing agent comprising carbon dioxide, a second blowing agent comprising water and a third blowing agent comprising a carboxylic acid, a derivative of a carboxylic acid or a mixture of a carboxylic acid and a derivative of a carboxylic acid; reacting the second and the third blowing agents with a reactive material in the reaction mixture to liberate gas.

The reactive material may comprise an isocyanate

Preferably, the carboxylic acid comprises formic acid. The derivative of the carboxylic acid is preferably a derivative of formic acid. The derivative of the carboxylic acid is preferably a salt of the carboxylic acid.

The carbon dioxide is preferably liquid carbon dioxide.

The reaction mixture may comprise a polyol component. In one embodiment, the polyol component may comprise a polyether polyol. The polyether polyol may be a reaction product of an alkylene oxide with a polyhydric alcohol. The alkylene oxide may comprise ethylene oxide or propylene oxide, or a mixture of ethylene oxide and propylene oxide. The polyhydric alcohol may be glycerol.

In another embodiment, the polyol component may be a polyester polyol. A suitable such polyester polyol can be formed from bi-functional acids, such as adipic acids, which may be reacted with a diol such as ethylene glycol.

The water may be present in the range of 1 to 5 parts per 100 parts by weight of the polyol component, preferably in the range of 2 to 4 parts per 100 parts by weight of the polyol component. More preferably, the water is present in an amount of substantially 3.5 parts per 100 parts by weight of the polyol component.

The carbon dioxide may be present in the range of 1 to 6 parts per 100 parts by weight of the polyol component, conveniently in the range of 1 to 5 parts per 100 parts by weight of the polyol component, and preferably in the range of 2 to 4 parts per 100 parts by weight of the polyol component. More preferably, the carbon dioxide is present in an amount of substantially 4 parts per 100 parts by weight of the polyol component.

The third blowing agent may be present in the range of 1 to 4 parts per 100 parts by weight of the polyol component. Preferably, the third blowing agent is present in an amount of substantially 3 parts per 100 parts by weight of the polyol component.

The polyol component may be a hydroxyl or amine terminated polyol.

In one embodiment, the carbon dioxide may be introduced, conveniently in liquefied form, into the polyol component. Preferably, the carbon dioxide is introduced into the polyol component under pressure and at a reduced temperature, for example the pressure of at least 4 bar, and a temperature of -14 to -22 °C.

The reaction mixture may comprise an isocyanate component, which may be an organic isocyanate. The isocyanate may be a diisocyanate, a polyisocyanate or a mixture of diisocyanates and polyisocyanates. Where the said reactive material is an isocyanate, the reactive material may be the isocyanate component forming part of the reaction mixture.

The isocyanate component may be present in the reaction component in an amount described as the isocyanate index, where the amount of isocyanate is expressed in terms of the relative amounts of isocyanate and other components in the reaction mixture that are reactive towards the isocyanate component for example, if a stoichiometric amount of the isocyanate component is present in the reaction mixture with equivalent stoichiometric amount of components reactive towards the isocyanate component, then the isocyanate index is expressed as 100.

The isocyanate index for the reaction mixture may be in the range of 80 to 125.

The isocyanate component may comprise toluene diisocyanate, diphenylmethane diisocycanate, or mixtures of toluene diisocyanate and diphenylmethane diisocyanate. If it is desired, other polyisocyanates may be used. Preferably, the isocyanate, which may be toluene diisocyanate, is present in an amount of substantially 57 parts per 100 parts by weight of the polyol component.

The reaction mixture may include other ingredients. The other ingredients may comprise a catalyst, for example an organometallic catalyst. A suitable catalyst may be stannous octoate. The reaction mixture may include a second catalyst, which may be an amine. Additional amines may be added to the reaction mixture to ease processing. The second catalyst and/or the additional of amine may comprise one or more of dimethylethanolamine, triethylene diamine, dimethylbenylamine, and bis (dimethylaminoethyl) ether. The amines may be provided to catalyse the reaction between water and isocyanate, and/or between the polyol component and isocyanate. The reaction mixture may include reaction modifiers, which may comprise crosslinking or chain-linking agents. The reaction modifiers may comprise diethanolamine, triethanolamine, ethylene glycol, glycerol, dipropylene glycol and phenylenediamine.

The reaction mixture may also contain a stabiliser, which may help to achieve nucleation during foaming. The stabiliser may also assist help stabilise any initial froth formed, and any subsequent rising of the reaction mixture. The stabiliser may comprise a polysiloxane-polyoxyalkylene block polymer.

The process for producing the polyurethane foam may require the use of suitable equipment as would be appreciated by persons skilled in the art. The equipment may be operated in a known manner, as would be appreciated by persons skilled in the art.

The process may be used to manufacture foam in either discreet slabstock form or continuously.

An embodiment of the invention will now be described with reference to the following example:

| **Example** | | |
|---|---|---|
| **Component** | **Parts by Weight** | **Throughput (kg/min)** |
| Polyol | 100 | 125 |
| Toluene disocyanate | 56.66 | 70.8 |
| Silicone | 1.30 | 1.63 |
| Amine 1 | 0.62 | 0.78 |
| Amine 2 | 0.48 | 0.60 |
| Amine 3 | 0.20 | 0.26 |
| Stannous Octoate | 0.345 | 0.431 |
| Formic Acid | 3.00 | 3.75 |
| Liquid CO₂ | 4.00 | 5.00 |
| Water | 3.50 | 4.38 |

Amines 1, 2 and 3 can be any suitable amines or blends/mixture of amines. For example Amines 1, 2 and 3 could be as follows:
Amine 1 may be a blend of bis(dimethylaminoethyl) ether and dipropylene glycol. A suitable such substance is sold under the trade mark NIAX A133 by GE Silicones.
Amine 2 may be a blend of N-cetyl, N, N-dimethylamine and isopropanol. A suitable such substance is old under the trade mark Dabco B-16 by Air Products.
Amine 3 may be dimethylethanolamine.
If desired Amines 1, 2 or 3 and/or other ingredients can be diluted for ease of pumping.
The above composition is used to manufacture a polyurethane foam having a density in the range of substantially 13 to 14 kg/m³, e.g. 13.5 kg/m³ or 13.6 kg/m³. The manufacture of the foam is by a continuous flow process having the throughput shown in the third column. The foam produced has the following properties:

| | |
|---|---|
| Density | 13.6 kg/m³ |
| Hardness (40%) | 1.4 kPa |
| Porosity | 318 litres per minute |
| Compression Set (50%) | 4% |
| Tensile Strength (kPa) | 89 |
| Elongation (%) | 214 |

The toluene diisocyanate used in the example comprised a mixture of isomers comprising approximately 80 weight % of the 2, 4 toluene diisocyanate isomer and approximately 20 weight % of the 2, 6 toluene diisoscyanate. Such a mixture is known as T80/20. Alternatively, a mixture comprising 65 weight % of the 2, 4 toluene diisocyanate isomer and 35 weight per cent of the 2, 6 toluene diisocyanate isomer, known as T65/35.

There is thus described in the above example, a method of producing a polyurethane foam which does not require the use of volatile organic compounds but still manages to produce a foam which has a low density of for example, approximately, 13.5 kg/m³.

Although the above description of the preferred embodiment relates to the production of polyurethane foams designed for cushioning materials with high fatigue value, the procedures can also be used to manufacture polyurethane foams made using polyols containing ester linkages. These polyols can be derived from bifunctional acids such as adipic acid reacted with diols such as diethylene glycol.

Various modifications can be made without departing from the scope of the invention. For example, the method could be used to make other types of foams, polyvinylchloride, polyethylene or polyester foams. Also, the formic acid could be replaced by a salt of formic acid or a mixture of formic acid and a salt of formic acid

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

## Claims

1. A composition for manufacturing a foam material, the composition comprising a reaction mixture for forming the material and a blowing medium to provide gas to foam the material, the blowing medium comprising a first blowing agent comprising carbon dioxide, a second blowing agent comprising water, and a third blowing agent comprising a carboxylic acid, a derivative of a carboxylic acid, or a mixture of a carboxylic acid and a derivative of a carboxylic acid, wherein the second and the third blowing agents can be reacted with a reactive material to liberate gas.

2. A composition according to claim 1 wherein the reactive material comprises an isocyanate

3. A composition according to claim 1 or 2 wherein the carboxylic acid comprises formic acid, and the derivative of the carboxylic acid comprises a derivative of formic acid.

4. A composition according to any of claims 1, 2 or 3 wherein the derivative of the carboxylic acid comprises a salt of the carboxylic acid.

5. A composition according to any preceding claim wherein the carbon dioxide comprises liquid carbon dioxide.

6. A composition according to any preceding claim wherein the reaction mixture comprises a polyol component.

7. A composition according to claim 6 wherein the polyol component comprises polyether polyol.

8. A composition according to claim 6 wherein the polyol component comprises a polyester polyol.

9. A composition according to any of claims 6 to 8 wherein the water is present in the range of 1 to 5 parts per 100 parts by weight of the polyol component, preferably in the range of 2 to 4 parts per 100 parts by weight of the polyol component, and more preferably, the water is present in an amount of substantially 3.5 parts per 100 parts by weight of the polyol component.

10. A composition according to claims 6 to 9 wherein the third blowing agent is present in the range of 1 to 4 parts per 100 parts by weight of the polyol component, and preferably, the third blowing agent is present in an amount of substantially 3 parts per 100 parts by weight of the polyol component.

11. A composition according to claims 6 to 10 wherein the carbon dioxide is present in the range of 1 to 5 parts per 100 parts by weight of the polyol component, preferably in the range of 2 to 4 parts per 100 parts by weight of the polyol component, and more preferably, the carbon dioxide is present in an amount of substantially 4 parts per 100 parts by weight of the polyol component.

12. A composition according to claims 6 to 11 wherein the polyol component is a hydroxyl or amine terminated polyol.

13. A composition according to any preceding claim wherein the reaction mixture comprises an isocyanate component.

14. A composition according to claim 13 wherein the isocyanate component comprises a diisocyanate, a polyisocyanate or a mixture of diisocyanates and polyisocyanates.

15. A composition according to claim 13 or 14 wherein where the said reactive material is an isocyanate, the reactive material comprises the isocyanate component forming part of the reaction mixture.

16. A composition according to any of claims 13 to 15 wherein the isocyanate component comprises toluene diisocyanate, diphenylmethane diisocycanate, or mixtures of toluene diisocyanate and diphenylmethane diisocyanate.

17. A composition according to claim 15 wherein where the isocyanate component comprises toluene diisocyanate, the isocyanate is present in an amount of substantially 57 parts per 100 parts by weight of the polyol component.

18. A method of manufacturing a foam material comprising providing a composition as claimed in any preceding claim and reacting the second and third blowing agents with a reactive material to liberate gas.

19. A method according to claim 17 wherein the carbon dioxide is introduced into the polyol component.

20. A method according to any of claims 17 or 18 wherein the carbon dioxide is introduced into the polyol component under pressure and at a reduced temperature.

21. A method according to claim 19 wherein the carbon dioxide is introduced at a pressure of at least 4 bar and at a temperature of -14 to -22°C.
